# EUROPEAN PATENT APPLICATION

(11) **EP 4 350 521 A1**
(43) Date of publication of application: **10.04.2024**
(21) Application number: 22827600.2
(22) Date of filing: 22.06.2022
(51) Int. Cl.: G06F 11/22

(54) **DATA PROCESSING METHOD AND RELATED APPARATUS**

(30) Priority: 22.06.2021 CN 202110694352
(71) Applicant: Huawei Technologies Co., Ltd., Shenzhen, Guangdong 518129 (CN)
(72) Inventor: CAO, Jianlong, Shenzhen, Guangdong 518129 (CN); MA, Wanwangying, Shenzhen, Guangdong 518129 (CN); LIAN, Xueguo, Shenzhen, Guangdong 518129 (CN); LIU, Hongjun, Shenzhen, Guangdong 518129 (CN)
(74) Representative: Gill Jennings & Every LLP
(86) International application number: PCT/CN2022/100373
(87) International publication number: WO 2022/268108

(57) **Abstract**

This application discloses a data processing method, applied to a terminal. The method includes: obtaining a first instruction, where the first instruction instructs to write first data into a first target area, the first target area is a storage area in a first memory, and the first memory has no error checking and correcting ECC function; determining a second target area in a second memory according to the first instruction, where the second target area is a storage area in the second memory, and the second memory has an ECC function; and writing the first data into the second target area. In this solution, target data that is indicated to be written into a specific memory area is changed to be written into a memory with an ECC function, and the memory with the ECC function protects the target data. This avoids execution of a large-scale program, and effectively reduces time overheads during program running.

## Description

This application claims priority to Chinese Patent Application No. 202110694352.1, filed with the China National Intellectual Property Administration on June 22, 2021 and entitled "DATA PROCESSING METHOD AND RELATED APPARATUS", which is incorporated herein by reference in its entirety.

### TECHNICAL FIELD

This application relates to the field of computer technologies, and in particular, to a data processing method and a related apparatus.

### BACKGROUND

As a necessary component in a computer system, a memory usually exists in systems of different architectures in a form of memory module. During system running, a hard or soft error may occur in the memory. The hard error refers to an unrecoverable data error caused by a hardware problem. The soft error refers to a data error that is caused by data transition and can be recovered by power-on, power-off, or restart. To maintain normal running of the system, it is usually necessary to detect and repair the data error caused by the soft error.

In a related technology, an error detection method based on instruction replication is mainly used to detect the data error caused by the soft error. The error detection method based on instruction replication is to replicate each original instruction by using a compiler to obtain a copy instruction, and allocate different memory units to the original instruction and the copy instruction. During execution of the instruction, if it is detected that data of the original instruction is inconsistent with that of the copy instruction, it is considered that the soft error occurs, and the data is repaired.

However, because the original instruction needs to be copied in the related technology, a scale of a program finally obtained through compilation is increased, thereby increasing time overheads during program running.

### SUMMARY

This application provides a data processing method. Target data that is indicated to be written into a specific memory area, for example, instruction data of a program or data generated during program running, is changed to be written into a memory with an error checking and correcting (Error Correcting Code, ECC) function, and the memory with the ECC function protects the target data. This avoids execution of a large-scale program, and effectively reduces time overheads during program running.

A first aspect of this application provides a data processing method. The method may be applied to a thread running at a virtualization privilege layer. The method includes: The thread obtains a first instruction. The first instruction may include a logical address of a first target area, and the first instruction instructs to write first data into the first target area in a first memory. The first target area is a storage area in the first memory, and the first memory has no error checking and correcting ECC function. The logical address of the first target area may be preconfigured on the thread. Therefore, in a process in which a terminal executes the first instruction, the thread may intercept the first instruction based on the logical address of the first target area.

Then, the thread determines a second target area in a second memory according to the first instruction, where the second target area is a storage area in the second memory, and the second memory has an ECC function. The thread may search the second memory for a memory area marked as a reserved memory area, to determine the second target area. Alternatively, after obtaining the first instruction, the thread may allocate a memory area in the second memory as the second target area corresponding to the first target area. Alternatively, the thread may determine, according to a preset second mapping relationship, the second target area corresponding to the first target area. The second mapping relationship is pre-established, and is used to indicate that the first target area corresponds to the second target area.

Finally, the thread writes the first data into the second target area. For example, the thread may modify a physical address mapped to the logical address of the first target area to a physical address of the second target area. In this way, when executing the first instruction, the terminal determines, based on the logical address of the first target area in the first instruction, the physical address that is of the second target area and that is mapped to the logical address of the first target area, to write the first data in the first instruction into the second target area.

In this solution, a specific memory area in a memory without an ECC function is specified, and target data to be stored in the specific memory area is changed to be stored in a memory with the ECC function. The memory with the ECC function implements error checking and correcting on the target data. This avoids execution of a large-scale program, and effectively reduces time overheads during program running.

In a possible implementation, when the thread searches the second memory for the memory area marked as the reserved memory area, to determine the second target area, or allocates the memory area in the second memory as the second target area corresponding to the first target area, the thread may further establish a mapping relationship between the first target area and the second target area, to facilitate subsequent data reading or writing.

Specifically, the method further includes: The thread establishes a first mapping relationship between the second target area and the first target area, where the first mapping relationship is used to indicate data reading or writing. The first mapping relationship that is between the second target area and the first target area and that is established by the thread may be actually a mapping relationship between the logical address of the first target area and the physical address of the second target area.

The first mapping relationship between the second target area and the first target area is established, so that when an instruction for writing data into the first target area or an instruction for reading data in the first target area is subsequently received, it can be ensured that the data can be written into the second target area or the data in the second target area can be read.

In a possible implementation, the method further includes: The terminal obtains a second instruction, where the second instruction instructs to read data in the first target area, that is, the second instruction carries the logical address of the first target area. Then, the terminal reads the first data in the second target area according to the foregoing relationship and the second instruction. In other words, the terminal may determine, according to the first mapping relationship, that a physical address corresponding to the logical address of the first target area in the second instruction is the physical address of the second target area. Therefore, the terminal reads the first data in the second target area.

In a possible implementation, the method further includes: The terminal obtains a third instruction, where the third instruction instructs to write second data into the first target area, that is, the third instruction also carries the logical address of the first target area. Then, the terminal may write, according to the first mapping relationship and the third instruction, the second data indicated in the third instruction into the second target area. In other words, the terminal may determine, according to the first mapping relationship, that a physical address corresponding to the logical address of the first target area in the third instruction is the physical address of the second target area. Therefore, the terminal writes the second data into the second target area.

In a possible implementation, before the writing the first data into the second target area, the method further includes: The thread moves the third data in the second target area out of the second target area if there is no idle storage space in the second target area.

The third data in the second target area is moved out of the second target area, so that it can be ensured that the second target area has sufficient space to store the first data.

In a possible implementation, that the thread moves the third data in the second target area out of the second target area includes: The thread writes the third data in the second target area into the first target area and a backup area, where there is a first mapping relationship between the backup area and the first target area, and the backup area is located in a memory without an ECC function; and the thread deletes the third data from the second target area.

The first target area and the backup area may be located in a same memory, or the first target area and the backup area may be located in different memories. In addition, neither the memory in which the first target area is located nor the memory in which the backup area is located has the ECC function. After the terminal configures the first target area on which error detection needs to be performed, the thread may allocate, in the memory without the ECC function, the backup area corresponding to the first target area, to back up data stored in the first target area.

In this solution, when the second target area has no idle storage space, the data in the second target area is moved to the first target area and the backup area, and error detection is implemented on the data by using the first target area and the backup area. This ensures that error detection can be performed on the data in the memory, and ensures reliability of system running. In addition, data error detection is implemented based on the first target area and the backup area, so that execution of a program with an increased scale can also be avoided, to reduce memory occupation during program running.

In a possible implementation, the third data is determined based on a least recently used (Least Recently Used, LRU) algorithm.

In a possible implementation, the method further includes: The thread obtains a fourth instruction, where the fourth instruction instructs to read the third data; the thread reads the data in the first target area and the data in the backup area according to the fourth instruction; and the thread returns the data in the first target area if the data in the first target area is the same as the data in the backup area.

A second aspect of this application provides a data processing method, including: obtaining a fifth instruction, where the fifth instruction instructs to write target data into a first area; determining a second area according to the fifth instruction; and writing the target data into the first area and the second area.

In this solution, data error detection is implemented based on that the data is written into both the first area and the second area, so that execution of a program with an increased scale can be avoided, to reduce memory occupation during program running.

In a possible implementation, the method further includes: obtaining a sixth instruction, where the sixth instruction instructs to read data in the first area; reading the data in the first area and data in the second area according to the sixth instruction; and returning the data in the first area if the data in the first area is the same as the data in the second area; or determining that an error occurs in the data if the data in the first area is the same as the data in the second area.

A third aspect of this application provides a data processing apparatus, including an obtaining unit and a processing unit. The obtaining unit is configured to obtain a first instruction, where the first instruction instructs to write first data into a first target area, the first target area is a storage area in a first memory, and the first memory has no error checking and correcting ECC function. The processing unit is configured to determine a second target area in a second memory according to the first instruction, where the second target area is a storage area in the second memory, and the second memory has an ECC function. The processing unit is further configured to write the first data into the second target area.

In a possible implementation, the processing unit is further configured to establish a first mapping relationship between the second target area and the first target area, where the first mapping relationship is used to indicate data reading or writing.

In a possible implementation, the obtaining unit is further configured to obtain a second instruction, where the second instruction instructs to read data in the first target area; and the processing unit is further configured to read the first data in the second target area according to the first mapping relationship and the second instruction.

In a possible implementation, the obtaining unit is further configured to obtain a third instruction, where the third instruction instructs to write second data into the first target area; and the processing unit is further configured to write the second data to the second target area according to the first mapping relationship and the third instruction.

In a possible implementation, the processing unit is further configured to determine the second target area in the second memory according to the first instruction and a preset second mapping relationship, where the second mapping relationship is used to indicate that the first target area corresponds to the second target area.

In a possible implementation, the processing unit is further configured to move third data in the second target area out of the second target area if there is no idle storage space in the second target area.

In a possible implementation, the processing unit is further configured to write the third data in the second target area to the first target area and a backup area, where there is a first mapping relationship between the backup area and the first target area, and the backup area is located in a memory without an ECC function; and the processing unit is further configured to delete the third data from the second target area.

In a possible implementation, the third data is determined based on a least recently used LRU algorithm.

In a possible implementation, the obtaining unit is further configured to obtain a fourth instruction, where the fourth instruction instructs to read the third data; the processing unit is further configured to read the data in the first target area and the data in the backup area according to the fourth instruction; and the processing unit is further configured to return the data in the first target area if the data in the first target area is the same as the data in the backup area.

In a possible implementation, the apparatus is applied to a thread running at a virtualization privilege layer, and the thread is configured to obtain the first instruction based on an address of the first target area.

A fourth aspect of this application provides a data processing apparatus, including an obtaining unit and a processing unit. The obtaining unit is configured to obtain a fifth instruction, where the fifth instruction instructs to write target data into a first area. The processing unit is configured to determine a second area according to the fifth instruction. The processing unit is further configured to write the target data into the first area and the second area.

In a possible implementation, the obtaining unit is further configured to obtain a sixth instruction, where the sixth instruction instructs to read data in the first area; and the processing unit is further configured to: read the data in the first area and data in the second area according to the sixth instruction, return the data in the first area if the data in the first area is the same as the data in the second area, and determine that an error occurs in the data if the data in the first area is the same as the data in the second area.

A fifth aspect of this application provides a terminal. The terminal includes a memory and a processor, the memory stores code, the processor is configured to execute the code, and when the code is executed, the terminal performs the method according to any one of the implementations of the first aspect or the second aspect.

A sixth aspect of this application provides a computer-readable storage medium. The computer-readable storage medium stores a computer program, and when the computer program is run on a computer, the computer is enabled to perform the method according to any one of the implementations of the first aspect or the second aspect.

A seventh aspect of this application provides a computer program product. When the computer program product runs on a computer, the computer is enabled to perform the method according to any one of the implementations of the first aspect or the second aspect.

An eighth aspect of this application provides a chip, including one or more processors. Some or all of the processors are configured to read and execute a computer program stored in a memory, to perform the method according to any possible implementation of any one of the foregoing aspects.

Optionally, the chip includes the memory, and the memory and the processor are connected to the memory by using a circuit or a wire. Optionally, the chip further includes a communication interface, and the processor is connected to the communication interface. The communication interface is configured to receive data and/or information that needs to be processed. The processor obtains the data and/or information from the communication interface, processes the data and/or information, and outputs a processing result through the communication interface. The communication interface may be an input/output interface. The method provided in embodiments of this application may be implemented by one chip, or may be cooperatively implemented by a plurality of chips.

### BRIEF DESCRIPTION OF DRAWINGS

FIG. 1 is a schematic diagram of a system software layer related to an exception level according to an embodiment of this application;
FIG. 2 is a schematic diagram of a structure of a terminal 101 according to an embodiment of this application;
FIG. 3 is a schematic flowchart of a data processing method 300 according to an embodiment of this application;
FIG. 4 is a schematic diagram of storing first data by an HBED thread according to a first instruction according to an embodiment of this application;
FIG. 5 is a schematic diagram of storing data in a buffer pool by an HBED thread according to an embodiment of this application;
FIG. 6 is a schematic diagram of storing data in a buffer pool by an application program/operating system according to an embodiment of this application;
FIG. 7 is a schematic diagram of moving data out of a second target area according to an embodiment of this application;
FIG. 8 is a schematic flowchart of a data processing method 800 according to an embodiment of this application;
FIG. 9 is a schematic diagram of storing target data by an HBED thread according to a fifth instruction according to an embodiment of this application;
FIG. 10 is a schematic flowchart of reading data by an HBED thread according to an embodiment of this application;
FIG. 11 is a schematic diagram of a structure of a data processing apparatus 1100 according to an embodiment of this application; and
FIG. 12 is a schematic diagram of a structure of a computer-readable storage medium 1200 according to an embodiment of this application.

### DESCRIPTION OF EMBODIMENTS

The following describes embodiments of this application with reference to the accompanying drawings. It is clear that the described embodiments are merely some rather than all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved.

For ease of understanding, the following first describes technical terms in embodiments of this application.

Soft error: The soft error is a transient hardware fault phenomenon triggered by high-energy particle irradiation, voltage disturbance, or geomagnetic interference in an external environment. When high-energy subatomic particles pass through silicon in ultra large scale circuit storage cells (flip flops, register cells, or random access memory cells), free charges are generated. These charges accumulate in a circuit node in a very short interval (about 15 ps). When the charges are accumulated more than a specific degree, the stored data changes, causing a system error. The damage to the circuit is not permanent. Therefore, this phenomenon is referred to as the soft error, which is also called soft error. The soft error may be caused by cosmic rays, boron fission, alpha rays, system noise, or electromagnetic interference.

The soft error does not damage an internal structure of a circuit, but can affect normal running of a program by changing a processor status or a storage unit value. As a result, system reliability is severely affected. With the development of integrated circuit manufacturing techniques, performance of a modern microprocessor is greatly improved, and a threat of the soft error becomes more serious. For example, factors such as sudden electronic interference near a memory may cause a soft error in the memory.

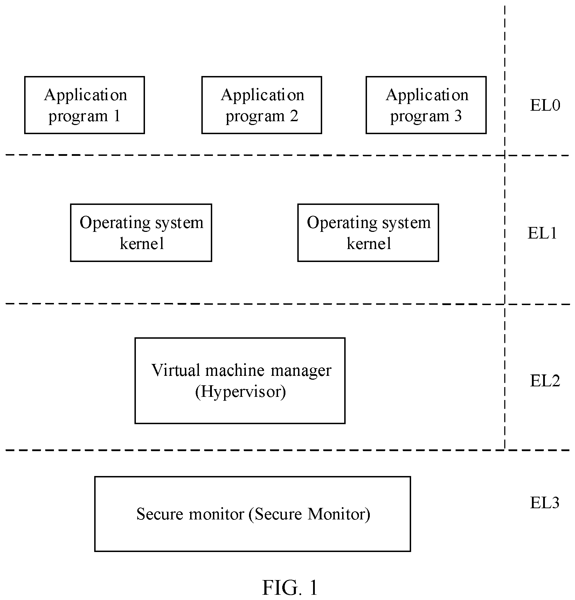

Exception level (Exception Level, EL): The concept of the exception level is introduced for the first time in a processor architecture ARMv8. Each exception level represents a different privilege level. FIG. 1 is a schematic diagram of a system software layer related to an exception level according to an embodiment of this application. As shown in FIG. 1, a processor has different exception levels at run time. A user level is represented by EL0, a privilege level is represented by EL1, a hypervisor level is represented by EL2, and a monitoring (Monitor) mode is represented by EL3. In addition, privileges of the four levels EL0, EL1, EL2, and EL3 are different, and an order of the privileges is: ELO<EL1 <EL2<EL3. Generally, EL0 represents a user space layer, configured to run an application program; EL1 represents an operating system layer, configured to run an operating system; EL2 represents a virtualization privilege layer, configured to run a virtual machine; and EL3 represents a security monitoring layer, configured to implement switching between a secure state and an insecure state.

Virtualization technology: A physical computer is virtualized into a plurality of logical computers. Each logical computer can run different operating systems and application programs without affecting each other, making full use of hardware resources.

Virtual machine manager (Hypervisor): software used to create and execute virtual machines, running at the virtualization privilege layer. The hypervisor is software that directly runs on physical hardware. Hypervisor manages physical hardware so that different virtual machines can share physical resources (resources such as processors, memories, and peripherals). The hypervisor directly connects to physical the resources. Therefore, the hypervisor needs to run at the virtualization privilege layer. The hypervisor running at the virtualization privilege layer can manage all software programs running at the user space layer and operating system layer.

Error checking and correcting technology (ECC): a technology that can implement error checking and correcting. The ECC can correct single-bit or multi-bit errors in a memory, and a calculation speed is fast. This enables errors to be tolerated in the memory and corrected, so that a system can continue to operate normally without interruption due to errors.

The ECC is developed based on parity check. In a digital circuit, a smallest data unit is referred to as bit (bit), or referred to as data bit. A bit is a minimum unit in the memory. A bit uses " 1" and "0" to indicate data high-level and low-level signals. In the digital circuit, eight consecutive bits are one byte (byte). In a memory without "parity check", each byte has only 8 bits. If an error occurs in a bit, corresponding data stored in the bit changes, causing an error in an application program. In addition to each byte (8 bits), an extra bit is added to the memory with the "parity check" for error detection. For example, if a byte stores a value (1, 0, 1, 0, 1, 0, 1, 1), all the bits are added (1+0+1+0+1+0+1+1=5), and 5 is an odd number. If odd parity is used (a sum of nine corresponding digits, that is, a byte (8 bits) plus an error-detected bit, is an odd number), the error-detected bit should be 0 (5+0=5, and 5 is an odd number). If even parity check is used (a sum of nine corresponding digits, that is, a byte (8 bits) plus an error-detected bit, is an even number), the error-detected bit should be 1 (5+1=6, and 6 is an even number). When the processor returns and reads stored data, the processor adds data stored in first 8 bits again and checks whether a calculation result is consistent with a parity bit. When the processor finds that the two are different, the processor attempts to correct these errors.

A parity bit is added to an original data bit to check correctness of the first 8 bits data. However, as a quantity of data bits increases, the parity bit increases exponentially. The 8 bits data bit requires one parity bit, and 16 bits data bit requires two parity bits. The ECC is also implemented by adding a parity bit to the original data bit. A difference between the ECC and the parity check is: If the data bit is 8 bits, 5 bits need to be added to check and correct errors. Each time a quantity of data bits doubles, the ECC adds only one parity bit. To be specific, when the data bit is 16 bits, the ECC bit is 6 bits; when the data bit is 32 bits, the ECC bit is 7 bits; when the data bit is 64 bits, the ECC bit is 8 bits; and so on. Each time the data bit is doubled, the ECC bit is increased by one bit. The ECC has more parity bits and has a stronger error tolerance capability.

ECC memory: a memory that uses an ECC technology. The ECC memory has an ECC function. The ECC memory is usually used on servers and graphics workstations to improve reliability of computer running.

Logical address: refers to an address of a memory unit seen from the perspective of an application program in a computer architecture. The logical address is usually different from a physical address. The logical address can be converted into the physical address by using an address translator or a mapping function. In a computer with an address transformation function, an address given by an instruction for accessing a memory is usually referred to as the logical address or a relative address. Generally, based on the logical address, an actual valid address in a memory, that is, a physical address, needs to be obtained through calculation or transformation in an addressing manner.

Physical address: indicates an address signal in a physical memory, which is a final result address of address transformation. The physical address is actually a real address of the memory.

In a related technology, an error detection method based on instruction replication is mainly used to detect a data error caused by a soft error. In the error detection method based on instruction replication, in a program compilation phase, a compiler replicates each original instruction to obtain a copy instruction, and allocates different memory units to the original instruction and the copy instruction. In a program compilation process, the compiler needs to copy the original instruction, and rearrange positions of the original instruction and the copy instruction, so that the original instruction and the copy instruction can be concurrently executed in a program execution process. In a process of executing an instruction of a program, if the processor detects that data of the original instruction is inconsistent with data of the copy instruction, the processor considers that a soft error occurs, and repairs the data.

It is clear that, because the original instruction needs to be copied in the related technology, a scale of a program finally obtained through compilation is increased, thereby increasing time overheads during program running. In addition, because an instruction needs to be copied and rearranged in the compilation phase in the related technology, intrusive modification is caused to a program, and a compiled program cannot be protected.

In view of this, embodiments of this application provide a data processing method. Target data that is indicated to be written into a specific memory area, for example, instruction data of a program or data generated during program running, is changed to be written into a memory with an error checking and correcting (Error Correcting Code, ECC) function, and the memory with the ECC function protects the target data. This avoids execution of a large-scale program, and reduces time overheads during program running.

A terminal in embodiments of this application may include the memory with the ECC function and a memory without an ECC function. For example, the terminal may be, for example, a personal computer (personal computer, PC), a notebook computer, a server, a mobile phone (mobile phone), a tablet computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home). The terminal may be a device running an Android system, an iOS system, a windows system, or another system. For ease of understanding, the following describes the data processing method provided in embodiments of this application by using an example in which the terminal is a smartphone.

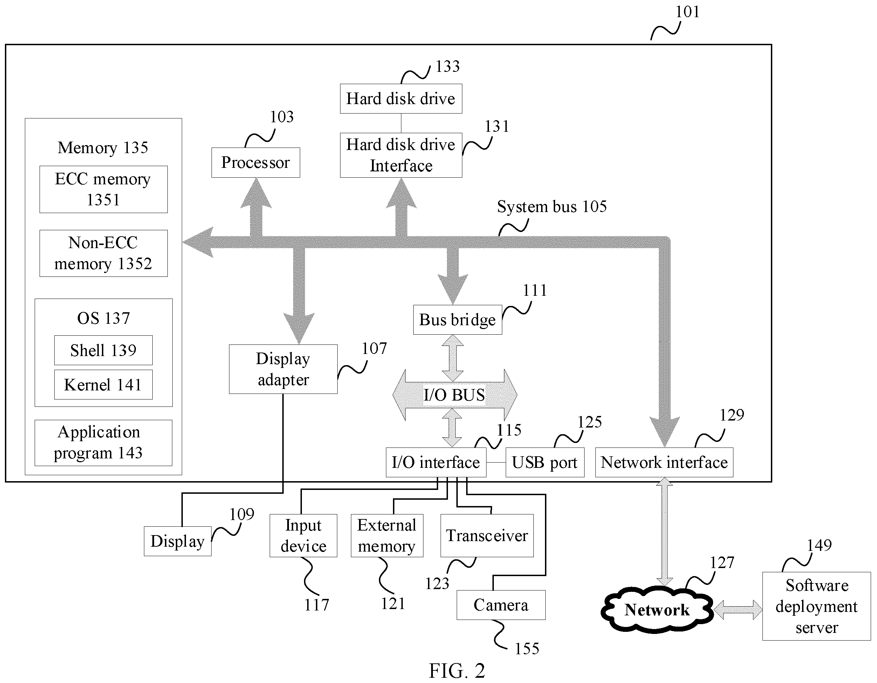

FIG. 2 is a schematic diagram of a structure of a terminal 101 according to an embodiment of this application. As shown in FIG. 2, the terminal 101 includes a processor 103, and the processor 103 is coupled to a system bus 105. The processor 103 may be one or more processors, and each processor may include one or more processor cores. A video adapter (video adapter) 107 is further included, and the video adapter may drive a display 109, and the display 109 is coupled to the system bus 105. The system bus 105 is coupled to an input/output (I/O) bus through a bus bridge 111. An I/O interface 115 is coupled to the I/O bus. The I/O interface 115 communicates with a plurality of I/O devices, for example, an input device 117 (for example, a touchscreen), an external memory 121 (for example, a hard disk, a floppy disk, an optical disc, or a USB flash drive), a multimedia interface, a transceiver 123 (which may send and/or receive a radio communication signal), a camera 155 (which may capture static and dynamic digital video images), and an external USB port 125. Optionally, an interface connected to the I/O interface 115 may be a USB port.

The processor 103 may be any conventional processor, including a reduced instruction set computing (reduced instruction set Computing, RISC) processor, a complex instruction set computing (complex instruction set computing, CISC) processor, or a combination thereof. Optionally, the processor may be a dedicated apparatus such as an ASIC.

The terminal 101 may communicate with a software deployment server 149 through a network interface 129. For example, the network interface 129 is a hardware network interface, for example, a network interface card. A network 127 may be an external network such as the internet, or an internal network such as the Ethernet or a virtual private network (virtual private network, VPN). Optionally, the network 127 may alternatively be a wireless network, for example, a Wi-Fi network or a cellular network.

A hard disk drive interface 131 is coupled to the system bus 105. A hardware drive interface is connected to the hard disk drive 133. The memory 135 is coupled to the system bus 105. The data running in the memory 135 may include an operating system (OS) 137, an application program 143, and a scheduling table of the terminal 101. The memory 135 includes a memory with an ECC function (that is, an ECC memory 1351) and a memory without an ECC function (that is, a non-ECC memory 1352). A hypervisor and a thread that run at a virtualization privilege layer may be deployed on a memory with the ECC function, and the operating system (OS) 137 and the application program 143 may be deployed on the memory without the ECC function.

The operating system includes a shell 139 and a kernel (kernel) 141. The shell 139 is an interface between a user and the kernel of the operating system. The shell is an outermost layer of the operating system. The shell manages interaction between the user and the operating system: waiting for an input from the user, interpreting the input from the user to the operating system, and processing various output results of the operating system.

The kernel 141 includes parts that are in the operating system and that are used to manage a memory, a file, a peripheral, and a system resource. The kernel 141 directly interacts with hardware, the kernel of the operating system usually runs a process, provides inter-process communication, and provides functions such as CPU time slice management, interrupt, memory management, and I/O management.

For example, when the terminal 101 is a smartphone, the application program 143 includes a program related to instant messaging. In an embodiment, when the application program 143 needs to be executed, the terminal 101 may download the application program 143 from the software deployment server 149.

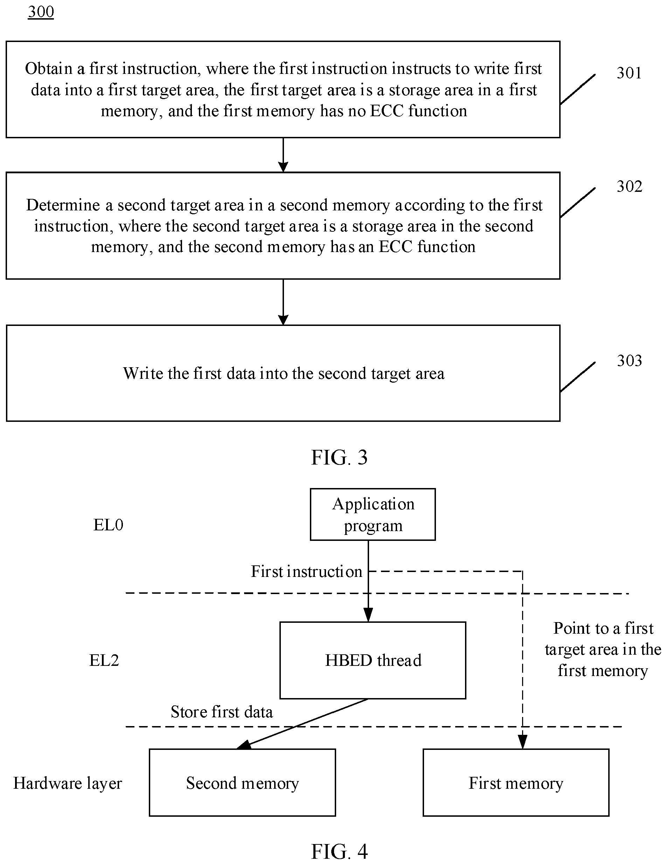

FIG. 3 is a schematic flowchart of a data processing method 300 according to an embodiment of this application. As shown in FIG. 3, the data processing method 300 includes the following steps 301 to 303.

Step 301: Obtain a first instruction, where the first instruction instructs to write first data into a first target area, the first target area is a storage area in a first memory, and the first memory has no ECC function.

In this embodiment, the data processing method 300 may be applied to a thread running at a virtualization privilege layer, and the thread may be referred to as, for example, a hypervisor based error detection (Hypervisor based error detection, HBED) thread. The hypervisor and the HBED thread that run at the virtualization privilege layer may be deployed on a memory with the ECC function, to ensure reliability of the hypervisor and the HBED thread in a running process. An operating system and an application program on a terminal run on virtual machines managed by the hypervisor.

In a process in which the terminal executes the application program, a processor in the terminal executes the first instruction. The first instruction may include a logical address of the first target area, and the first instruction instructs to write the first data into the first target area in the first memory.

Generally, in a process in which the terminal executes the application program, usually, after the operating system first loads instruction code of the application program from a hard disk to a memory, the processor in the terminal executes the instruction code of the application program in the memory. For example, the first instruction may be an instruction from the operating system, and the first instruction instructs to write instruction code of an application program into the first target area, that is, the first data indicated in the first instruction is the instruction code of the application program. Alternatively, the first instruction may be an instruction from an application program, and the first instruction instructs to write data generated by the application program into the first target area, that is, the first data indicated in the first instruction is data generated during running of the application program.

Before the first instruction is executed, the logical address of the first target area may be preconfigured on the HBED thread in the terminal. The first target area is a storage area in the first memory without the ECC function, and the first target area is configured as a protected object, that is, soft error detection needs to be performed on data in the first target area. Therefore, in a process in which the terminal executes the first instruction, the HBED thread may intercept the first instruction based on the logical address of the first target area. For example, a user may configure, in a user configuration file, for example, a device tree blob (device tree blob, DTB), a memory area as the first target area, so that the HBED thread can obtain the logical address of the first target area. Specifically, the user may configure a memory area as the first target area by specifying a start address of the memory area and a size of the memory area; or the user may configure a memory area as the first target area by specifying a start address and an end address of the memory area.

Step 302: Determine a second target area in a second memory according to the first instruction, where the second target area is a storage area in the second memory, and the second memory has an ECC function.

Because soft error detection needs to be performed on the first data to be written into the first target area, the HBED thread in the terminal may determine the second target area in the second memory based on the first target area indicated in the first instruction, so as to write the first data into the second target area. The second target area is a storage area in the second memory with the ECC function. Therefore, when the first data is written into the second target area, the second memory with the ECC function can implement error detection and correction on the first data.

In a possible implementation, the terminal may reserve a memory area (that is, the second target area) in the second memory to store data to be written into the first target area. For example, the terminal marks the reserved second target area in the second memory. In this way, after the HBED thread obtains the first instruction that instructs to write data into the first target area, the HBED thread may determine, in the second memory, the second target area corresponding to the first target area. For example, the HBED thread searches the second memory for a memory area marked as the reserved memory area, and uses the memory area as the second target area.

In another possible implementation, alternatively, after obtaining the first instruction, the HBED thread may allocate, in the second memory, a memory area as the second target area corresponding to the first target area, to store the data to be written into the first target area.

In still another possible implementation, alternatively, the HBED thread may determine, according to a preset second mapping relationship, the second target area corresponding to the first target area. The second mapping relationship is pre-established, and is used to indicate that the first target area corresponds to the second target area.

Step 303: Write the first data into the second target area.

In a possible implementation, after the HBED thread in the terminal determines the second target area corresponding to the first target area, the HBED thread may modify a physical address mapped to the logical address of the first target area to a physical address of the second target area. In this way, after an address mapping relationship is modified, the logical address of the first target area is mapped to the physical address of the second target area. Therefore, when executing the first instruction, the terminal determines, based on the logical address of the first target area in the first instruction, the physical address that is of the second target area and that is mapped to the logical address of the first target area, to write the first data in the first instruction into the second target area.

For example, FIG. 4 is a schematic diagram of storing first data by an HBED thread according to a first instruction according to an embodiment of this application. As shown in FIG. 4, during execution of an application program, a processor in a terminal executes a first instruction in the application program. The first instruction carries a logical address and first data, and instructs to store the first data in an area corresponding to the logical address. The logical address in the first instruction points to a first target area in a first memory. A logical address of the entire first target area is preconfigured in the HBED thread. Therefore, the HBED thread may intercept, based on the logical address of the first target area, the first instruction corresponding to the application program. In addition, the HBED thread modifies a physical address corresponding to the logical address carried in the first instruction to a physical address of a second target area in a second memory. In this way, when executing the first instruction, the terminal may map the logical address in the first instruction to the physical address of the second target area in the second memory, so that the first data is stored in the second target area in the second memory.

In this embodiment, a specific memory area in a memory without an ECC function is specified, and target data to be stored in the specific memory area is changed to be stored in a memory with the ECC function. The memory with the ECC function implements error checking and correcting on the target data. This avoids execution of a large-scale program, and effectively reduces time overheads during program running.

In a possible embodiment, when the thread searches the second memory for a memory area marked as a reserved memory area, to determine the second target area, or allocates a memory area in the second memory as the second target area corresponding to the first target area, the thread may further establish a mapping relationship between the first target area and the second target area, to facilitate subsequent data reading or writing.

Specifically, after the HBED thread determines the second target area in the second memory according to the first instruction, the HBED thread may further establish a first mapping relationship between the second target area and the first target area, where the first mapping relationship is used to indicate data reading or writing. The first mapping relationship between the second target area and the first target area is established, so that when an instruction for writing data into the first target area or an instruction for reading data in the first target area is subsequently received, it can be ensured that the data is written into the second target area or the data in the second target area is read.

Specifically, the first mapping relationship that is between the second target area and the first target area and that is established by the HBED thread may be actually a mapping relationship between the logical address of the first target area and the physical address of the second target area. In this way, after the HBED thread establishes the first mapping relationship between the logical address of the first target area and the physical address of the second target area, when subsequently executing a related instruction that carries the logical address of the first target area, the terminal may determine, based on the established first mapping relationship, the physical address of the second target area corresponding to the logical address of the first target area, so as to write or read data in the second target area.

In a possible example, after the HBED thread establishes the first mapping relationship between the second target area and the first target area, the terminal obtains a second instruction, where the second instruction instructs to read data in the first target area, that is, the second instruction carries the logical address of the first target area. Then, the terminal reads the first data in the second target area according to the foregoing relationship and the second instruction. In other words, the terminal may determine, according to the first mapping relationship, that a physical address corresponding to the logical address of the first target area in the second instruction is the physical address of the second target area. Therefore, the terminal reads the first data in the second target area.

In another possible example, after the HBED thread establishes the first mapping relationship between the second target area and the first target area, the terminal obtains a third instruction, where the third instruction instructs to write second data into the first target area, that is, the third instruction also carries the logical address of the first target area. Then, the terminal may write, according to the first mapping relationship and the third instruction, the second data indicated in the third instruction into the second target area. In other words, the terminal may determine, according to the first mapping relationship, that a physical address corresponding to the logical address of the first target area in the third instruction is the physical address of the second target area. Therefore, the terminal writes the second data into the second target area.

In the foregoing example, the first mapping relationship between the second target area and the first target area is established, so that when executing the instruction instructing to read/write data in the first target area, the terminal can implement data reading/writing in the second target area according to the first mapping relationship. According to the first mapping relationship established between the second target area and the first target area, steps of intercepting, by the HBED thread running at a virtualization privilege layer, an instruction related to the first target area, and modifying, by the HBED, a physical address mapped to a logical address in the instruction may be avoided, thereby further reducing time overheads during program running.

Because a capacity on the memory with the ECC function is limited, a capacity allocated to the second target area is also limited. In this case, when the second target area is full of data, it needs to be ensured that new data can be written into the second target area.

In a possible embodiment, before the writing the first data into the second target area, the method further includes: The HBED thread moves third data in the second target area out of the second target area if there is no idle storage space in the second target area. The third data in the second target area is moved out of the second target area, so that it can be ensured that the second target area has sufficient space to store the first data.

In a possible implementation, the third data is determined based on a least recently used (Least Recently Used, LRU) algorithm. The LRU algorithm is a page replacement algorithm used to eliminate a page that has not been used for the longest time. Specifically, the LRU algorithm assigns an access field to each page in the memory to record time t elapsed since last time a page is accessed. When a page needs to be eliminated, the LRU algorithm selects a page with a maximum time value t from existing pages as the page to be eliminated. In this way, based on the LRU algorithm, the terminal may determine the third data that is not used for the longest time in the second target area, and move the third data out of the second target area.

A data volume of the third data that needs to be moved out of the second target area may be determined based on a data volume of the first data indicated by the first instruction. To ensure that the second target area can have sufficient idle space to store the first data after the third data is moved out, the data volume of the third data may be greater than or equal to the data volume of the first data. For example, when the data volume of the first data indicated by the first instruction is 10 megabytes (MByte), the HBED thread may determine, in the second target area, 10 megabytes of data least recently used as the third data, and move the 10 megabytes of third data out of the second target area.

In addition, when the second target area still has some remaining idle storage space, but the remaining idle space is insufficient for storing the first data, a sum of the data volume of the third data to be moved out of the second target area and a size of the currently remaining idle space of the second target area needs to be greater than or equal to the data volume of the first data.

In this embodiment, because the second target area is located in the second memory with the ECC function, after the HBED thread moves the third data out of the second target area, the third data that is moved out is no longer located in the second memory with the ECC function. In other words, after the third data is moved out, because error detection is no longer implemented on the third data by using the memory with the ECC function, error detection needs to be performed on the third data in another manner.

For example, that the HBED thread moves the third data in the second target area out of the second target area includes: The HBED thread writes the third data in the second target area to the first target area and a backup area, where there is a first mapping relationship between the backup area and the first target area, and the backup area is located in a memory without an ECC function. After the third data is written into the first target area and the backup area, the HBED thread deletes the third data from the second target area.

The first target area and the backup area may be located in a same memory, or the first target area and the backup area may be located in different memories. In addition, neither the memory in which the first target area is located nor the memory in which the backup area is located has the ECC function. After the terminal configures the first target area on which error detection needs to be performed, the HBED thread may allocate, in the memory without the ECC function, a backup area corresponding to the first target area, to back up data stored in the first target area.

In other words, after the HBED thread moves the third data out of the memory with the ECC function, the HBED thread stores the third data in both two different memory areas, so that error detection can be performed on the third data when the third data is subsequently read.

In addition, before the HBED thread stores the third data in the second target area, the instruction obtained by the HBED thread actually instructs to store the third data in the first target area, and the instruction further carries a logical address that is in the first target area and that is used to store the third data. Therefore, after the HBED thread moves the third data out of the second target area, the HBED thread may store the third data at an address originally specified in the first target area, so that the third data can be correctly read from the first target area subsequently. For the backup area, when the HBED thread allocates the backup area, the HBED thread may establish a first mapping relationship between an address in the backup area and an address in a target area. In this way, after the HBED thread determines a storage address of the third data in the first target area, the HBED thread may store the third data in the address corresponding to the backup area.

In this solution, when the second target area has no idle storage space, the data in the second target area is moved to the first target area and the backup area, and error detection is implemented on the data by using the first target area and the backup area. This ensures that error detection can be performed on the data in the memory, and ensures reliability of system running. In addition, data error detection is implemented based on the first target area and the backup area, so that execution of a program with an increased scale can also be avoided, to reduce memory occupation during program running.

In a possible embodiment, after the HBED thread stores the third data in the first target area and the backup area, the method further includes: The HBED thread may obtain a fourth instruction, where the fourth instruction instructs to read the third data. That is, the fourth instruction may carry the storage address (the storage address is a logical address) of the third data in the first target area. Because the HBED thread establishes the first mapping relationship between the first target area and the backup area, the HBED thread may read the data in the first target area based on the storage address indicated by the fourth instruction, and read the data in the backup area based on the address in the backup area corresponding to the storage address.

After the HBED thread reads the data in the first target area and the data in the backup area, the HBED thread compares the two pieces of read data, and if the data in the first target area is the same as the data in the backup area, the data in the first target area is returned to an application program that requests to read the third data. If the data in the first target area is different from the data in the backup area, the HBED thread may determine that a soft error occurs in the data, and the HBED thread may return information prompting a data error, to subsequently perform data repair.

For ease of understanding, the following describes in detail the data processing method provided in this embodiment with reference to an example.

Specifically, the HBED thread first reserves an area in the memory with the ECC function as the second target area, to map a protected memory area (that is, the first target area). The reserved memory area by the HBED thread may be referred to as a buffer pool (Buffer pool).

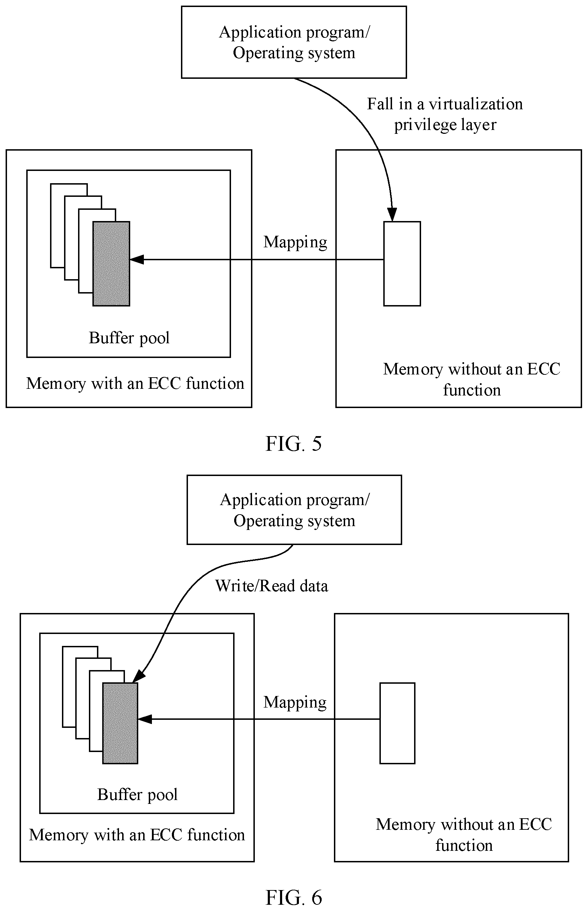

FIG. 5 is a schematic diagram of storing data in a buffer pool by an HBED thread according to an embodiment of this application. When an application program located at EL0 or an operating system located at EL1 layer writes data to a first target area for the first time, the application program or the operating system falls into a virtualization privilege layer, that is, a data write instruction from the application program or the operating system is intercepted by the HBED thread, and the HBED thread is responsible for writing the data. The HBED thread searches the buffer pool for an idle memory area according to the data write instruction. The idle memory area may be referred to as, for example, a second target area. The HBED thread establishes a mapping from the first target area to the second target area, and writes the data into the second target area.

FIG. 6 is a schematic diagram of storing data in a buffer pool by an application program/operating system according to an embodiment of this application. As shown in FIG. 6, after the HBED thread establishes a first mapping relationship between a first target area and a second target area, when an application program/operating system needs to write data into or read data from the first target area, the application program/operating system does not need to fall into a virtualization privilege layer, but directly writes the data into the corresponding second target area or reads the data from the second target area.

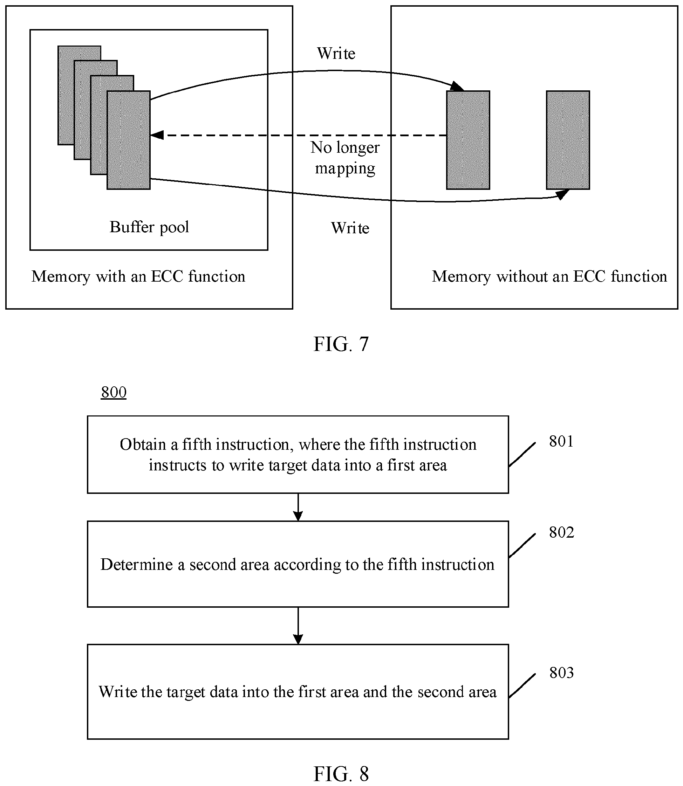

FIG. 7 is a schematic diagram of moving data out of a second target area according to an embodiment of this application. As shown in FIG. 7, in a process in which an HBED thread continuously writes data to a buffer pool, if the HBED thread finds that there is no idle memory area in the buffer pool, the HBED thread moves some data in the buffer pool out of the buffer pool. Specifically, the HBED thread writes some data in the buffer pool to both a first target area and a backup area, and deletes some data in the buffer pool.

The foregoing embodiment describes implementation of data error detection by storing data in a memory with an ECC function. The following describes implementation of data error detection by storing data in a plurality of areas.

FIG. 8 is a schematic flowchart of a data processing method 800 according to an embodiment of this application. As shown in FIG. 8, the data processing method 800 includes the following steps 801 to 803.

Step 801: Obtain a fifth instruction, where the fifth instruction instructs to write target data into a first area.

In this embodiment, the data processing method 300 may be applied to a thread running at a virtualization privilege layer, for example, the foregoing HBED thread. In a process in which a terminal executes an application program, a processor in the terminal executes the fifth instruction. The fifth instruction may include a logical address of the first area, and the first instruction instructs to write the target data into the first area in the memory.

Before the fifth instruction is executed, the logical address of the first area may be preconfigured on the HBED thread in the terminal. The first area is a storage area in a memory without an ECC function, and the first area is configured as a protected object, that is, soft error detection needs to be performed on data in the first area. Therefore, in a process in which the terminal executes the fifth instruction, the HBED thread may intercept the fifth instruction based on the logical address of the first area.

Step 802: Determine a second area according to the fifth instruction.

Because soft error detection needs to be performed on the target data to be written into the first area, the HBED thread in the terminal may determine, in the memory based on the first area indicated in the fifth instruction, the second area other than the first area, to simultaneously write the target data into the second area. The second area and the first area are two memory areas that do not overlap each other.

In a possible implementation, after obtaining the fifth instruction, the HBED thread may allocate another memory area in the memory as the second area corresponding to the first area, to store the data to be written into the first area. A size of the second area may be the same as a size of the first area.

Step 803: Write the target data into the first area and the second area.

After determining the second area, the HBED thread may write, according to the fifth instruction, the target data indicated in the fifth instruction into the first area and the second area, that is, store the target data in the first area and the second area.

In this way, because the target data is stored in both the first area and the second area, when the target data needs to be read, corresponding data may be read from the first area and the second area and compared, to implement error detection of the target data.

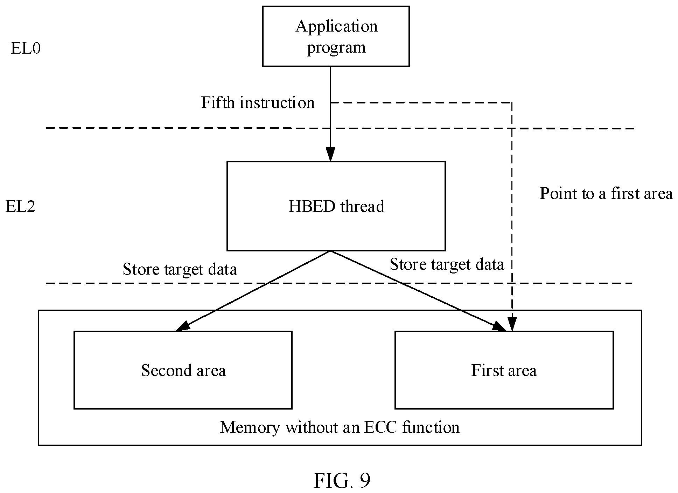

For example, FIG. 9 is a schematic diagram of storing target data by an HBED thread according to a fifth instruction according to an embodiment of this application. As shown in FIG. 9, during execution of an application program, a processor in a terminal executes the fifth instruction in the application program. The fifth instruction carries a logical address and target data, and instructs to store the target data in a first area corresponding to the logical address. The logical address of the first area is preconfigured in the HBED thread. Therefore, the HBED thread may intercept, based on the logical address of the first area, the fifth instruction corresponding to the application program. Finally, the HBED thread stores, in both the first area and the second area, the target data indicated in the fifth instruction.

In this solution, data error detection is implemented based on that the data is written into both the first area and the second area, so that execution of a program with an increased scale can be avoided, to reduce memory occupation during program running.

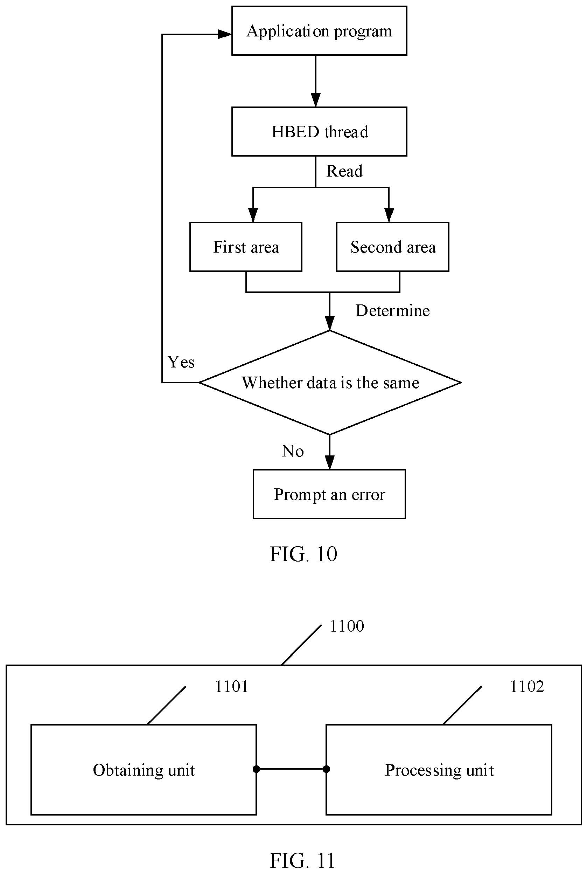

FIG. 10 is a schematic flowchart of reading data by an HBED thread according to an embodiment of this application. As shown in FIG. 10, in a possible embodiment, the data processing method 800 further includes: The HBED thread obtains a sixth instruction, where the sixth instruction instructs to read data in the first area. The HBED thread reads the data in the first area and the data in the second area according to the sixth instruction. If the data in the first area is the same as the data in the second area, the HBED thread returns the data in the first area to an application program that sends the sixth instruction; or if the data in the first area is different from the data in the second area, the HBED thread determines that an error occurs in the data, and the HBED thread may return error prompt information, to subsequently perform data repair.

To facilitate verification of beneficial effects of the data processing method described in the foregoing embodiments, corresponding tests are performed in this embodiment according to the foregoing data processing method.

Specifically, in the test, a protected environment keystone (Protected environment keystone, PEK) is used as a hypervisor running at a virtualization privilege layer, and an HBED thread is built in the PEK. The PEK and the HBED are deployed on a memory with an ECC function, to ensure reliability of the PEK and the HBED thread. In addition, a virtual machine is started by the PEK, and an application program is run in the virtual machine. As a configuration file of the PEK, a DTB file configures a protected memory area in a DTB. To detect time overheads during running of the HBED thread, the application program in the virtual machine continuously reads and writes the protected memory area for 50,000 times. Specifically, a comparison between read/write time overheads in the existing solution and an error detection solution that is based on an HBED and a memory with an ECC function and that is provided in this embodiment (that is, the data processing method 300) is shown in Table 1.

**Table 1**

| | 50,000 reads | 50,000 writes | δ50,000 reads | δ50,000 writes |
|---|---|---|---|---|
| Existing solution | 0.025112 | 0.022782 | | |
| HBED+ECC memory | 0.016288 | 0.0140736 | 64.86% | 61.78% |

It can be seen from Table 1 that, in the method provided in this embodiment, run-time overheads when 50,000 reads and 50,000 writes are performed are 64.86% and 61.78% of those in the existing solution respectively. It is clear that the time overheads are lower than those in the existing solution.

In addition, in terms of memory occupation, because each instruction is copied in the existing solution, a size of a target program is doubled compared with that of an original program. However, in the method provided in this embodiment, the original program is not modified, and the size of the program remains unchanged.

According to the embodiments corresponding to FIG. 1 to FIG. 10, to better implement the foregoing solutions in embodiments of this application, the following further provides related devices configured to implement the foregoing solutions.

For details, refer to FIG. 11. FIG. 11 is a schematic diagram of a structure of a data processing apparatus 1100 according to an embodiment of this application. The data processing apparatus 1100 includes an obtaining unit 1101 and a processing unit 1102. The obtaining unit 1101 is configured to obtain a first instruction, where the first instruction instructs to write first data into a first target area, the first target area is a storage area in a first memory, and the first memory has no error checking and correcting ECC function. The processing unit 1102 is configured to determine a second target area in a second memory according to the first instruction, where the second target area is a storage area in the second memory, and the second memory has an ECC function. The processing unit 1102 is further configured to write the first data to the second target area.

In a possible implementation, the processing unit 1102 is further configured to establish a first mapping relationship between the second target area and the first target area, where the first mapping relationship is used to indicate data reading or writing.

In a possible implementation, the obtaining unit 1101 is further configured to obtain a second instruction, where the second instruction instructs to read data in the first target area; and the processing unit 1102 is further configured to read the first data in the second target area according to the first mapping relationship and the second instruction.

In a possible implementation, the obtaining unit 1101 is further configured to obtain a third instruction, where the third instruction instructs to write second data into the first target area; and the processing unit 1102 is further configured to write the second data into the second target area according to the first mapping relationship and the third instruction.

In a possible implementation, the processing unit 1102 is further configured to determine the second target area in the second memory according to the first instruction and a preset second mapping relationship, where the second mapping relationship is used to indicate that the first target area corresponds to the second target area.

In a possible implementation, the processing unit 1102 is further configured to move third data in the second target area out of the second target area if there is no idle storage space in the second target area.

In a possible implementation, the processing unit 1102 is further configured to write the third data in the second target area to the first target area and a backup area, where there is a first mapping relationship between the backup area and the first target area, and the backup area is located in a memory without an ECC function; and the processing unit 1102 is further configured to delete the third data from the second target area.

In a possible implementation, the third data is determined based on an LRU algorithm.

In a possible implementation, the obtaining unit 1101 is further configured to obtain a fourth instruction, where the fourth instruction instructs to read the third data; the processing unit 1102 is further configured to read the data in the first target area and the data in the backup area according to the fourth instruction; and the processing unit 1102 is further configured to return the data in the first target area if the data in the first target area is the same as the data in the backup area.

In a possible implementation, the apparatus is applied to a thread running at a virtualization privilege layer, and the thread is configured to obtain the first instruction based on an address of the first target area.

In another possible embodiment, the obtaining unit 1101 is configured to obtain a fifth instruction, where the fifth instruction instructs to write target data into a first area. The processing unit 1102 is configured to determine a second area according to the fifth instruction. The processing unit 1102 is further configured to write the target data to the first area and the second area.

In a possible implementation, the obtaining unit 1101 is further configured to obtain a sixth instruction, where the sixth instruction instructs to read data in the first area; and the processing unit 1102 is further configured to: read the data in the first area and data in the second area according to the sixth instruction, return the data in the first area if the data in the first area is the same as the data in the second area, and determine that an error occurs in the data if the data in the first area is the same as the data in the second area.

The data processing method provided in embodiments of this application may be specifically performed by a chip in a terminal. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in a server performs the data processing methods described in the embodiments shown in FIG. 1 to FIG. 10. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

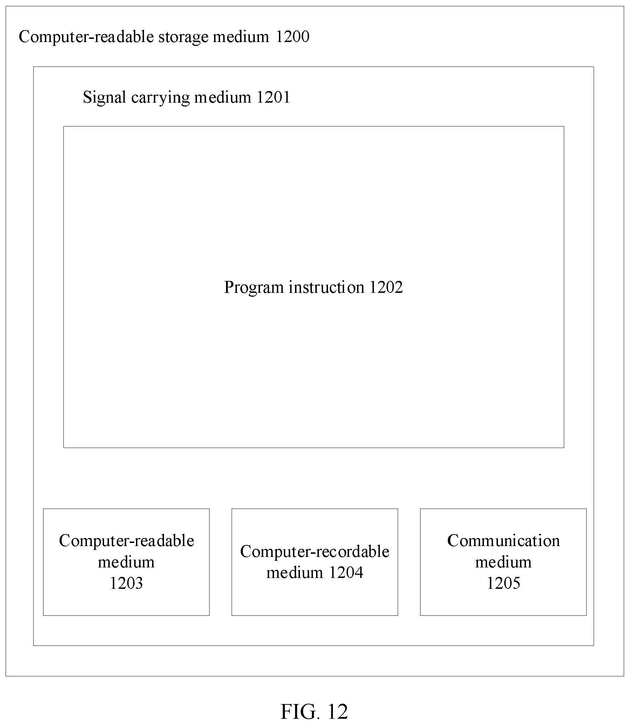

Referring to FIG. 12, this application further provides a computer-readable storage medium. In some embodiments, the method disclosed in FIG. 3 may be implemented as a computer program instruction encoded in a machine readable format on the computer-readable storage medium or encoded in another non-transitory medium or product.

FIG. 12 schematically shows a conceptual partial view of an example computer-readable storage medium arranged according to at least some embodiments shown herein, including a computer program for executing a computer process on a computing device.

In an embodiment, the computer-readable storage medium 1200 is provided by using a signal carrying medium 1201. The signal carrying medium 1201 may include one or more program instructions 1202, and when being run by one or more processors, the program instructions 1202 may provide the foregoing functions or some functions described for FIG. 2. Therefore, for example, referring to the embodiment shown in FIG. 3, one or more features of steps 301 to 303 may be undertaken by one or more instructions associated with the signal carrying medium 1201. In addition, the program instruction 1202 in FIG. 12 alternatively describes an example instruction.

In some examples, the signal carrying medium 1201 may include a computer-readable medium 1203, such as but not limited to a hard disk drive, a compact disc (CD), a digital video disc (DVD), a digital tape, a memory, a ROM, or a RAM.

In some implementations, the signal carrying medium 1201 may include a computer-recordable medium 1204, such as but not limited to a memory, a read/write (R/W) CD, an R/W DVD, and the like. In some implementations, the signal carrying medium 1201 may include a communication medium 1205, such as but not limited to a digital and/or analog communication medium (for example, an optical fiber cable, a waveguide, a wired communication link, or a wireless communication link). Therefore, for example, the signal carrying medium 1201 may be communicated by a wireless communication medium 1205 (for example, a wireless communication medium that complies with the IEEE 802.12 standard or another transmission protocol).

The one or more program instructions 1202 may be, for example, computer-executable instructions or logic implementation instructions. In some examples, a computing device may be configured to provide various operations, functions, or actions in response to the program instructions 1202 transmitted to the computing device by using one or more of the computer-readable medium 1203, the computer-recordable medium 1204, and/or the communication medium 1205.

It should be understood that the arrangement described herein is merely used as an example. Therefore, it may be understood by a person skilled in the art that other arrangements and other elements (for example, machines, interfaces, functions, sequences, and groups of functions) can be used instead, and that some elements may be omitted together based on an expected result. In addition, many of the described elements are functional entities that can be implemented as discrete or distributed components, or implemented in any suitable combination at any suitable position in combination with another component.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

## Claims

1. A data processing method, comprising:
obtaining a first instruction, wherein the first instruction instructs to write first data into a first target area, the first target area is a storage area in a first memory without error checking and correcting function;
determining a second target area in a second memory according to the first instruction, wherein the second target area is a storage area in the second memory, and the second memory has the error checking and correcting function; and
writing the first data into the second target area.

2. The method according to claim 1, wherein the method further comprises:
establishing a first mapping relationship between the second target area and the first target area, wherein the first mapping relationship is used to indicate data reading or writing.

3. The method according to claim 2, wherein the method further comprises:
obtaining a second instruction, wherein the second instruction instructs to read data in the first target area; and
reading the first data in the second target area according to the first mapping relationship and the second instruction.

4. The method according to claim 2 or 3, wherein the method further comprises:
obtaining a third instruction, wherein the third instruction instructs to write second data into the first target area; and
writing the second data into the second target area according to the first mapping relationship and the third instruction.

5. The method according to claim 1, wherein the determining a second target area in a second memory according to the first instruction comprises:
determining the second target area in the second memory according to the first instruction and a preset second mapping relationship, wherein
the second mapping relationship is used to indicate that the first target area corresponds to the second target area.

6. The method according to any one of claims 1 to 5, wherein before the writing the first data into the second target area, the method further comprises:
moving third data in the second target area out of the second target area if there is no idle storage space in the second target area.

7. The method according to claim 6, wherein the moving third data in the second target area out of the second target area comprises:
writing the third data in the second target area into the first target area and a backup area, wherein there is a mapping relationship between the backup area and the first target area, and the backup area is located in a memory without an ECC function; and
deleting the third data from the second target area.

8. The method according to claim 6 or 7, wherein the third data is determined based on a least recently used LRU algorithm.

9. The method according to claim 7, wherein the method further comprises:
obtaining a fourth instruction, wherein the fourth instruction instructs to read the third data;
reading the data in the first target area and data in the backup area according to the fourth instruction; and
returning the data in the first target area if the data in the first target area is the same as the data in the backup area.

10. The method according to any one of claims 1 to 8, wherein the method is applied to a thread running at a virtualization privilege layer, and the thread is configured to obtain the first instruction based on an address of the first target area.

11. A terminal, comprising a memory and a processor, wherein the memory stores code, the processor is configured to execute the code, and when the code is executed, the terminal performs the method according to any one of claims 1 to 10.

12. A computer-readable storage medium, comprising computer-readable instructions, wherein when the computer-readable instructions are run on a computer, the computer is enabled to perform the method according to any one of claims 1 to 10.

13. A computer program product, comprising computer-readable instructions, wherein when the computer-readable instructions are run on a computer, the computer is enabled to perform the method according to any one of claims 1 to 10.
